# EUROPEAN PATENT APPLICATION

(11) **EP 0 675 036 A1**
(43) Date of publication of application: **04.10.1995**
(21) Application number: 94302232.7
(22) Date of filing: 29.03.1994
(51) Int. Cl.: B62K 19/34

(54) **Bicycle bottom bracket**

(71) Applicant: KABUSHIKI KAISHA YAMAMOTO SEISAKUSHO, Matsubara-shi, Osaka (JP)
(72) Inventor: Yamamoto, Toshihiro, Matsubara-shi, Osaka (JP)
(74) Representative: Bankes, Stephen Charles Digby

(57) **Abstract**

A bicycle bottom bracket (10) for mounting a cartridge bottom bracket unit (34) comprising a sleeve (39) in which a crankshaft (35) is mounted by means of a bearing. One end of the sleeve (39) has a taper (55) and protrusions (50) which engage with a complementary taper (56) and grooves (51) in a lug (16a) of the bottom bracket (10). A fixing nut (57) which may have a tapered exterior (58) screws onto male threads (46) on one end of the sleeve (39) to draw the complementary tapers together. The protrusions may be omitted and the sleeve (39) screwed directly into female threads in the bottom bracket (10). The effects of deformation of female threads due to thermal deformation of the bottom bracket do not impair smooth rotation of the crankshaft and the tapping of one or both female threads in the bottom bracket may be omitted. More efficient assembly is thereby afforded.

## Description

The present invention relates to a bicycle bottom bracket suitable for mounting an assembled crankshaft unit in.

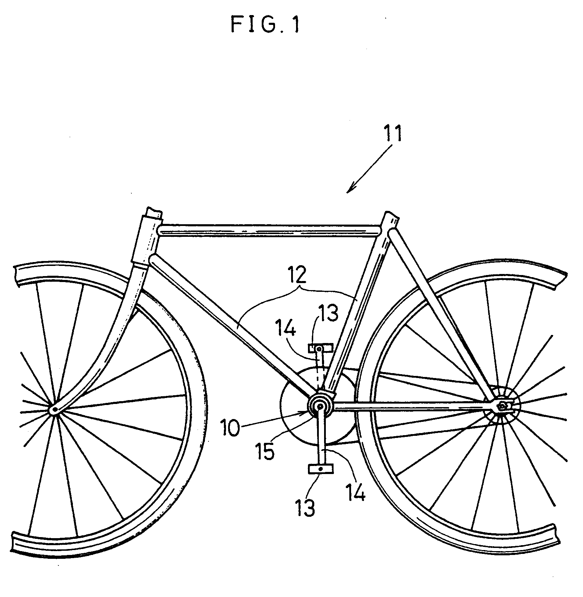

Fig. 1 shows a bottom bracket of a bicycle, including a bottom bracket shell 10 connected to a frame 12 of a bicycle 11, in which a crankshaft 15 for fixing pedal cranks 14 possessing pedals 13 is rotatably mounted.

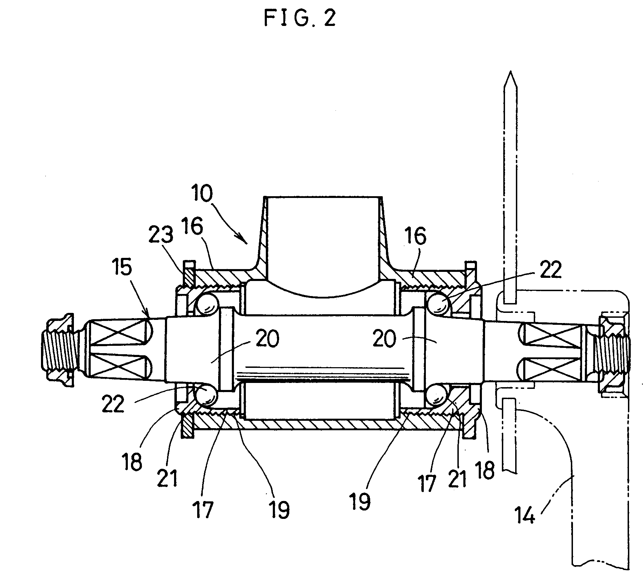

Fig. 2 shows a conventional bottom bracket structure, in which the shell 10 is formed as a separate member from the frame 12, and is welded to the frame. Female threads 17 are cut in the inner surface of right and left lugs 16 which project from the shell 10 in the lateral direction. These female threads 17 are engaged by male threads 19 cut in the outer circumference of right and left cups 18. By interposing balls 22 between right and left bearing surfaces 20 of the crankshaft 15 and ball holders 21 of the right and left cups 18 the crankshaft 15 is carried by the right and left cups 18. Numeral 23 in the diagram is a bottom bracket lock ring.

In such a bottom bracket structure, since the shell 10 is fixed to the frame 12 by welding, the shape (roundness) and centre line of the right and left lugs 16 may be deviated due to welding heat. Consequently the fitting of the right and left cups 18 which are screwed to the right and left lugs 16 may be poor. Thus, when the cups 18 have been screwed in, the centre line of the crankshaft remains deviated laterally, and smooth rotation of the bearing may not be obtained.

Furthermore, when installing the crankshaft 15 into the shell 10, it is necessary to screw in both right and left cups 18. This job is complicated, and if the right and left cups 18 have been deformed by heating/hardening they may not be perfectly round. Due to this deviation of shape and misalignment of the centre of the right and left lugs 16 the bearing centre of the crankshaft 15 is further deviated, and the rotation of the crankshaft 15 becomes worse.

It is a first object of the invention to provide a bicycle bottom bracket structure in which effects of deformation of female threads accompanying thermal deformation of right and left lugs of the bottom bracket do not adversely affect the rotation condition of the crankshaft.

It is a second object of the invention to provide a bicycle bottom bracket structure in which forming of female threads in one side or both sides of the bottom bracket shell can be eliminated.

It is a third object of the invention to provide a bicycle bottom bracket structure in which installation of the crankshaft is easy and efficient working is enhanced by assembly only involving one screwing operation.

It is a fourth object of the invention to provide a bicycle bottom bracket structure in which an assembled crankshaft unit is automatically aligned when mounted, the effects of the thermal deformation of the bottom bracket do not act on the crankshaft unit and the smooth rotation of the crankshaft is directly transmitted and maintained by the bottom bracket.

It is a fifth object of the invention to provide a bicycle bottom bracket structure in which a slope or taper is formed on the sleeve of the crankshaft unit so that the diameter of ball holders in this region can be wide. Consequently large balls can be used in the bearing and therefore the bearing is firm and stable, so that a smooth rotation is obtained.

It is a sixth object of the invention to provide a bicycle bottom bracket structure in which the above objects are achieved by forming the slope as a tapered or spherical surface.

Thus, according to the invention there is provided a bicycle bottom bracket structure in which a slope such as a tapered surface or spherical surface formed at one end side of a sleeve of a crankshaft unit is formed to correspond with a slope of a bottom bracket shell and the other end side is screwed and fixed in the corresponding bottom bracket shell so as to be screwed thereto only at one side.

The invention will now be described by way of example only with reference to the accompanying drawings in which:
FIG. 1 is a partial side view of a bicycle;
FIG. 2 is a sectional view showing a conventional bottom bracket;
FIG. 3 is a sectional view showing a bottom bracket representing a first embodiment of the invention;
FIG. 4 is a sectional view showing a second embodiment of the invention;
FIG. 5 is a sectional view showing a third embodiment of the invention;
FIG. 6 is a sectional view showing a fourth embodiment of the invention; and
FIG. 7 is a sectional view showing a fifth embodiment of the invention.

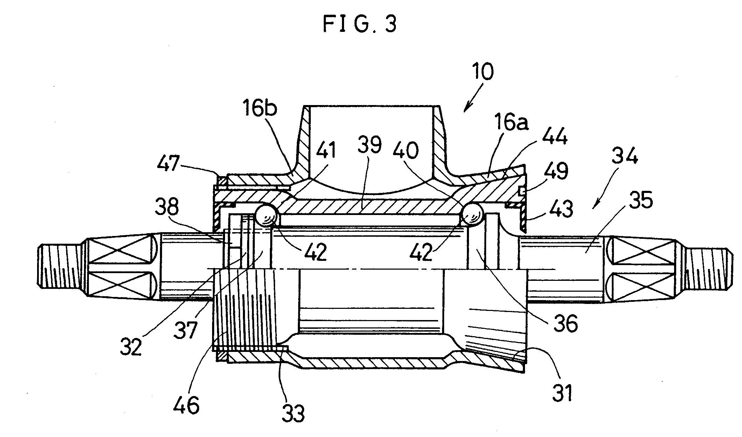

The first embodiment of the invention is described below with reference to Fig. 3. In Fig. 3 the bottom bracket 10 is the bottom bracket of the bicycle 11 showing in Fig. 1 and lugs 16a, 16b are formed at the right and left sides thereof.

On an inner surface of one lug 16a a taper (slope) 31 becoming narrower from outside to inside is formed.

On the inner surface of the other lug 16b female threads 33 are cut to which a crankshaft unit 34 described below is fitted.

The crankshaft unit 34 is composed as follows. A crankshaft 35 possesses a bearing surface 36 integrally formed thereon, and a ring shaped race member 37 screwed at a position distant therefrom by a specific gap. At the outside of the ring-shaped race member 37 a lock nut 38 for fixing the race member 37 is screwed on top of a spring washer 32.

The crankshaft 35 is borne in a sleeve 39 and ball race surfaces 40, 41 are formed in the sleeve 39 in correspondence with the bearing surface 36 and the race member 37. By interposing balls between the crankshaft and the ball race surfaces 40 and 41 the crankshaft 35 is rotationally supported by means of the sleeve 39. Numerals 43 in the drawing designates seals.

The outer surface at one end of the sleeve 39 of the crankshaft unit 34 is tapered (slopes) 44 and becomes narrower from outside to inside. The taper 31 formed in the inner surface of one lug 16a of the bottom bracket 10 is formed so as to match the taper angle of the sleeve 39.

At the other end of the sleeve 39 male threads 46 for engagement with the female threads 33 formed in the inner surface of the lug 16b of the bottom bracket 10 are formed. A lock ring 47 is mounted on the male threads 46.

On an outer surface of the tapered end of the sleeve 39 spanner holes 49 are formed at uniform intervals around the circumference.

To install the above described crankshaft unit 34 in the lugs 16a, 16b of the hanger 10, the end of the unit 34 with the male threads 46 is inserted through the lug 16a. The male threads 46 are then engaged with the female threads 33 of the lug 16b and tightened into place using an appropriate spanner inserted into the spanner holes 49. The lock ring 47 is mounted on the male threads 46 projecting from the lug 16b. When the crankshaft unit 34 is installed in this manner since the taper 44 of the sleeve 39 and the taper 31 of the lug 16a are matched, they are fixed together by a wedge effect. Therefore screwing is only required into the lug 16b so the assembling process is simple and easy.

Thread cutting of the bottom bracket 10 is only required at one location (in lug 16b) and manufacturing of a taper 31 is easier than thread cutting. Hence the processing manpower required to manufacture the hanger 10 is saved. Even if a bottom bracket 10 is thermally deformed by welding, since the tapers 31, 44 are matched, the bottom bracket is aligned automatically and hence the crankshaft unit 34 is free from effects of deformation of the bottom bracket 10. Moreover, the smooth rotation condition of the crankshaft 35 can be directly and simply set and maintained.

In addition, by forming the taper 44 at one side of the sleeve 39 of the crankshaft unit 34, the diameter of the ball holder 40 inside the crankshaft unit can be wide so that large balls 42 can be used for the bearing. Therefore the bearing is firm and stable and a favourable rotation and support of the crankshaft 35 is obtained.

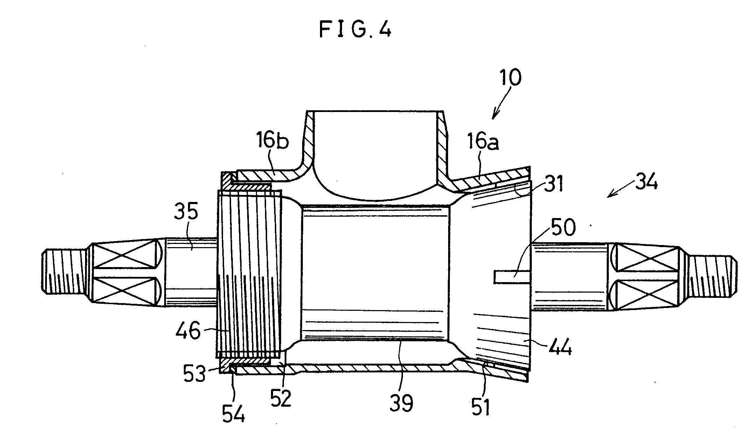

Fig. 4 shows a second embodiment of the invention. Constituent elements having the same functions as in the Fig. 3 embodiment are identified with the same reference numerals and their explanations are omitted. Protrusions 50 for preventing the sleeve 39 from rotating are formed at four equally spaced positions on the circumference of the taper 44 of the sleeve 39 of the crankshaft unit 34. Grooves 51 to be engaged by the protrusions 50 are formed on the inner surface of the taper 31 of the corresponding lug 16a. By inter-engagement of the protrusions and grooves rotation of the sleeve 39 is prevented.

On the inner surface of the other lug 16b of the bottom bracket 10 female threads are not cut. Instead a free hole 52 is formed and the free hole 52 is dimensioned to receive the outer surface of a flanged fixing nut 53. Numeral 54 in the diagram designates a spring washer.

When the above arrangement is assembled the protrusions 50 of the taper 44 of the crankshaft unit 34 engage in the grooves 51 of the taper 31 of the lug 16a to prevent the unit from rotating. The flanged fixing nut 53 is screwed onto the male threads 46 of the crankshaft unit 34 into the lug 16b through the spring washer 54. The crankshaft unit 34 is accordingly pulled and fixed in the lug 16b.

For this second embodiment, in addition to the advantages of the embodiment shown in Fig. 3, since female threads are not cut in either of the lugs 16a or 16b of the bottom bracket 10, manpower processing is further saved.

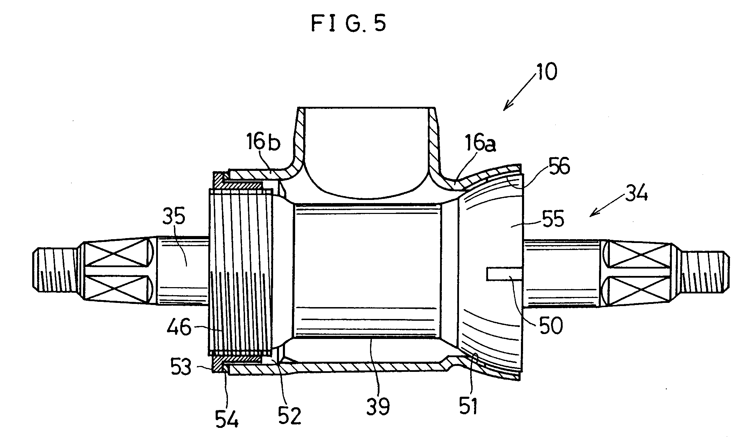

Fig. 5 shows a third embodiment of the invention. A part spherical surface 55 is formed, instead of the linear taper 44 formed on the sleeve 39 in Fig. 4. The inner surface of the lug 16a is also formed with a part spherical surface 56 which corresponds to the part spherical surface 55. Only this feature is different from the embodiment in Fig. 4. The other constituent elements having the same functions are identified with the same reference numerals and are not explained further.

This embodiment has the same installation technique and advantages as the embodiment shown in Fig. 4.

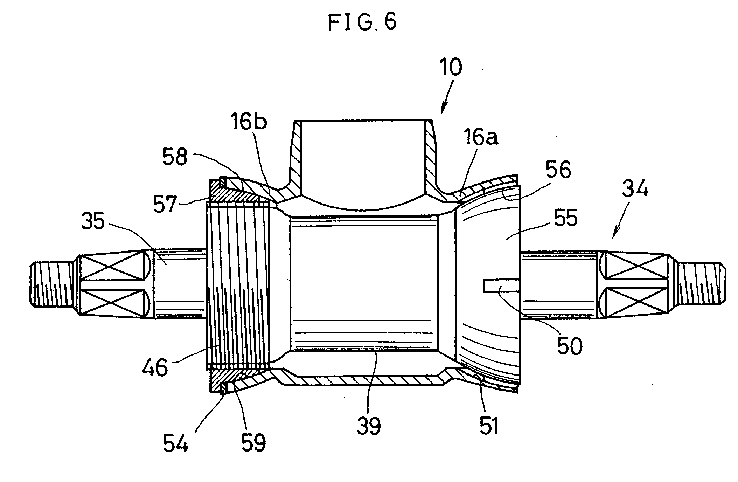

Fig. 6 shows a fourth embodiment of the invention. The outer surface of the flanged fixing nut 57 for screwing onto the sleeve 39 is also formed with a part spherical surface 58, and the inner surface of the lug 16b is also formed with a part spherical surface 59 to correspond thereto. This is the only difference from the embodiment in Fig. 5. The other constituent elements having the same functions are identified with the same reference numerals and their explanations are omitted.

With this construction, since the crankshaft unit 34 is easily and automatically aligned by both the part spherical surfaces 55, 56 and the other part spherical surfaces 58, 59 and the bearing of the crankshaft 35 cannot be deviated, a smooth rotation condition is achieved and maintained. Other advantages are obtained as in the embodiment shown in Fig. 5.

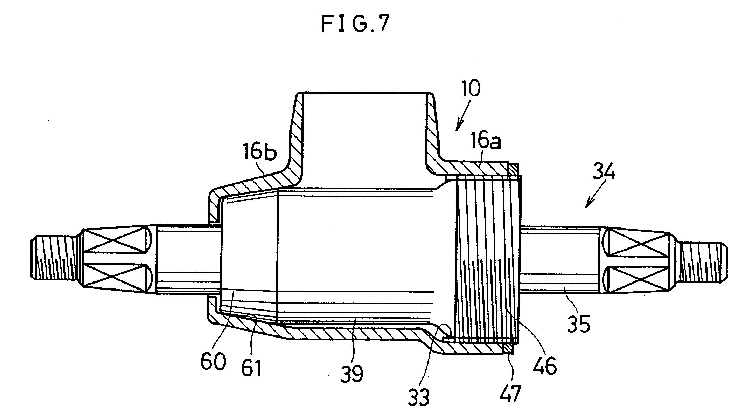

Fig. 7 shows a fifth embodiment of the invention. A linear taper 60 (or a spherical surface) formed at one end of the sleeve 39 of the crankshaft unit 34 is formed in a shape becoming narrower from inside to outside. Corresponding taper 61 is formed inside the lug 16b. The other constituent elements having the same functions are identified with the same reference numerals as in Fig. 3 and their explanations are omitted.

This embodiment has the same installation technique and advantages as the Fig. 3 embodiment.

In the embodiments shown in Figs. 4, 5 and 6 the rotation is prevented by means of engagement of the protrusions 50 with grooves 51. The tapers 31, 34 and part spherical surfaces 55, 56 may however be formed in a polygonal shape to achieve the same effect.

In the embodiments shown in Figs. 3 to 7, the slopes may also be formed in the reverse direction of inclination.

## Claims

1. A bicycle bottom bracket shell (10) for mounting a cartridge bottom bracket unit (34) comprising a sleeve (39) in which a crankshaft (35) is mounted by means of a bearing (42) wherein the bottom bracket shell (10) includes an inner surface (31, 56, 61) which tapers in the axial direction of the crankshaft (35) and towards which a corresponding taper (44, 51, 60) on an outer surface of the sleeve (39) is urgable by threaded means (46, 33, 53, 57).

2. A bottom bracket shell (10) as claimed in claim 1 wherein the taper (60) narrows towards one side of the shell (10) and the threaded means (33, 46) includes means for screwing the sleeve (39) into engagement with the other end of the shell (10).

3. A bottom bracket shell (10) as claimed in claim 1 wherein the taper (31, 56) narrows towards a central region of the shell and widens towards one end of the shell.

4. A bottom bracket shell (10) as claimed in claim 3 wherein the tapering inner surface (56) of the shell (10) includes keying means (51) for engagement with the sleeve (39).

5. A bottom bracket shell (10) as claimed in claim 4 wherein the keying means (51) comprises grooves for engagement by protrusions (50) on the sleeve (39).

6. A bottom bracket shell (10) as claimed in claim 3, 4 or 5 wherein the other end of the shell is adapted to receive a fixing nut (53, 57) for screwing into the sleeve (39).

7. A bottom bracket shell (10) as claimed in claim 6 wherein the other end of the shell is adapted to receive a fixing nut (57) which tapers towards a central region of the shell (10).

8. A bottom bracket shell (10) as claimed in claim 3 wherein the threaded means includes threads (33) provided in the other end of the shell (10).

9. A bottom bracket shell (10) as claimed in any preceding claim wherein the taper is a linear taper (44, 60).

10. A bottom bracket shell (10) as claimed in any one of claims 1 to 8 wherein the taper is formed as a part spherical surface (55).

11. A bicycle bottom bracket including a shell (10) as claimed in claims 1, 2, 3 or 8 in combination with a cartridge bottom bracket unit (34) including a sleeve (39) and a crankshaft (35) wherein the corresponding tapers are urged towards each other by screwing male threads (46) on the sleeve (39) into female threads (33) formed in the shell (10).

12. A bicycle bottom bracket including a shell (10) as claimed in claims 1 or 3 to 7 in combination with a cartridge bottom bracket unit (34) including a sleeve (39) and a crankshaft (35) wherein the corresponding tapers are urged towards each other by means of a fixing nut (53, 57) screwed onto male threads (46) on the sleeve (39) and into engagement with the shell (10).
